# EUROPEAN PATENT APPLICATION

(11) **EP 3 971 548 A1**
(43) Date of publication of application: **23.03.2022**
(21) Application number: 20197455.7
(22) Date of filing: 22.09.2020
(51) Int. Cl.: G01L 11/02, G01K 11/3206, G01H 9/00

(54) **SENSOR SYSTEM FOR DETECTING AT LEAST ONE PHYSICAL QUANTITY**

(71) Applicant: Nederlandse Organisatie voor toegepast- natuurwetenschappelijk Onderzoek TNO, 2595 DA 's-Gravenhage (NL)
(72) Inventor: DE BOER, Bart Michiel, 2595 DA 's-Gravenhage (NL); CHENG, Lun-Kai, 2595 DA 's-Gravenhage (NL); DE JONG, Willem, 2595 DA 's-Gravenhage (NL); ODERWALD, Michiel Peter, 2595 DA 's-Gravenhage (NL)
(74) Representative: V.O.

(57) **Abstract**

Sensor system for detecting at least one physical quantity, including:
- an elongated optical waveguide structure (1) for guiding an optical wave (W) along a longitudinal direction;
- a first reflector structure (3) for reflecting at least part (W1) of the optical wave towards and through a transversally arranged measuring space (S) that relates to a quantity to be measured;
characterized in that the first reflector structure (3) is integrated in the waveguide structure (1).

## Description

The invention relates to a sensor system for detecting at least one physical quantity

Various types of sensor systems are known from the prior art, and e.g. commercially available. The sensor system can be configured to be applied e.g. in the medical field.

As an example, WO2002023148 discloses a fiber-optic pressure sensor apparatus that includes a section of optical fiber coupled to an interferometer sensor tip having a structure made almost entirely of silicon. The tip structure includes a thin diaphragm bonded to a tip body. The tip body is bell-shaped in a sectional view and includes a curved cross-sectional shape and includes a fiber grip portion which holds a distal end of the optical fiber and a diaphragm support portion to which is bonded the diaphragm. The diaphragm includes a reflective film which is separated from an end surface of the optical fiber to define an interference cavity. The diaphragm deforms or deflects in response to a pressure difference from one side to the other. The movement of the diaphragm alters the optical path length of the interference cavity. The combination of reflections from the two surfaces of the interference cavity provides a standard optical interference signal for measurement by a measurement apparatus.

US2018199818 discloses a sensor that is implemented with a pressure guidewire for catheter use. The guide wire comprises a shaft tube having a proximal section and a sensor housing having a distal end, the proximal section and the sensor housing being the continuity of the same shaft tube. A fiber optic pressure sensor is embedded in the sensor housing and comprises an optical fiber extending within the sensor housing, the sensor adapted to measure a pressure of a fluid which is substantially applied in an axis collinear with the longitudinal axis of the guidewire. A marker band, to help in localizing the pressure guidewire in a patient's vessels, is embedded inside the sensor housing and fixed to the optical fiber for holding the pressure sensor inside the sensor housing.

Another example follows from US2018172536 which also relates to the field of pressure measurement and discloses fiber optic-based pressure measurement apparatus and methods, and applications including, but not limited to, the direct measurement and/or monitoring of differential pressure, gage pressure, and absolute pressure, as well as the indirect measurement and/or monitoring of fluid flow rate, liquid level, liquid density, fluid flow point velocity (using Pitot tube), filter screen quality monitoring, leak detection, and viscosity measurements. In particular, the disclose provides a pressure sensor device, comprising a pressure chamber housing, at least two separate pressure chambers within the housing ,at least one pressure port fluidically coupled to each of the at least two pressure chambers, at least one pressure transmitting element per every two pressure chambers disposed in the pressure chamber, which separates the at least two pressure chambers, and at least two optical sensing elements disposed in at least one of the pressure chambers, wherein the at least two optical sensing elements are each optically coupled to an optical transmission medium.

The present invention aims to provide an improved sensor system and respective method.

In particular, an aim of the invention is to provide a sensor system for accurately sensing or detecting at least one property, in particular a physical parameter or quantity. The invention aims to provide a system that has low maintenance, is durable and compact, wherein the system can preferably obtain data from a plurality of measuring points/locations at the same time, preferably swiftly or substantially instantaneously.

According to an aspect of the invention one or more of these goals can be achieved by the features of claim 1.

According to an aspect there is provided a sensor system for detecting at least one physical quantity, including:
- an elongated optical waveguide structure for guiding an optical wave along a longitudinal direction;
- a first reflector structure for reflecting at least part of the optical wave towards and through a transversally arranged measuring space that relates to a quantity to be measured;
wherein first reflector structure is integrated in the waveguide structure.

In this way, improved sensing of said physical quantity can be achieved. For example, the sensor system can be used for detecting the physical quantity at a location that may be difficult to reach, in particular a location alongside the elongated optical waveguide structure, and more in particular at a location that is remote from end sections of the waveguide structure. Also, the integrated first reflector structure can be made relatively compact and can provide reliable reflector operation, the integrated reflector structure e.g. being shielded by other waveguide parts and/or a said transversally arranged measuring space.

It is preferred that a change of the physical quantity (to be measured) leads to a change of the optical path of the light that is transmitted through the measuring space (the light being reflected into the measuring space by the integrated reflector structure of the optical waveguide structure). For example, during operation, the optical path length of light that is transmitted through the measuring space can be measured, the optical path length being associated with the physical quantity to be detected.

The change of the optical path (length) is preferable measured using interferometry. To that aim, for example, the sensor system can be configured to generate an optical reference wave that is not transmitted through the measuring space, wherein the reference wave is joined with light that has been transmitted through the measuring space to interfere therewith. The system can be configured to detect or process a resulting interference pattern, on order to detect (and measure) the change of optical path length, and use the result to determine a change of the respective (path length dependent) physical quantity.

According to a preferred embodiment, the elongated waveguide structure is or includes an optical fiber, in particular a flexible fiber.

In this way, reliable optical signal transmission can be achieved. Flexible optical fibers are commonly known, and can include a fiber core (e.g. made of glass or another optically transparent material) for optical signal transmission, the core e.g. being surrounded by a cladding and usually by one or more further layers such as a buffer, a shield et cetera. The fiber core typically has a small diameter, e.g. smaller than 100 micron, in particular about 50 micron for a multimode core and smaller than 10 micron for a single mode core. Outer diameters of fiber claddings can be smaller than 500 micron, for example about 250 or 125 micron. As is general knowledge, the fiber cladding usually consists of one or more cladding layers (of transparent material, e.g. glass) of a lower refractive index than a refractive index of the fiber core material (in order to achieve total internal reflection of a light wave that enters the fiber).

According to a further aspect of the invention, the elongated waveguide structure can be part of a catheter, e.g. for detecting a catheter related physical quantity (e.g. local pressure, a lumen related quantity, a lumen content, or the-like). For example, the catheter can include at least one lumen, e.g. at least one lumen for guiding or feeding fluid (liquid and/or gas) to a distal lumen end and/or at least one lumen having a closed distal end, wherein the afore-mentioned measuring space can be part of or provided by the lumen.

The integrated first reflector structure can be a Fiber Bragg Grating (FBG). The FBG can reflect part of incoming light, at a certain wavelength (the Bragg wavelength wavelength λ_{B}), and transmits other wavelengths of the incoming light. Thus, a plurality of Fiber Bragg gratings having mutually different Bragg wavelengths can be integrated with/in the optical waveguide, the FBGs being spaced-apart viewed along a longitudinal direction of the waveguide, for locally reflecting respective parts of incoming light. Similarly, each of the plurality of fiber Bragg gratings can be associated with its own transversally arranged measuring space, for locally measuring a physical quantity. As a result, a plurality of measurements can be carried out, at different locations viewed along the waveguide structure. In a straight-forward embodiment, in view of manufacturability, the fiber Bragg grating is arranged in a core of the optical fiber.

A fiber Bragg grating is commonly known; it includes a variation of refractive index (usually a periodic variation) of a fiber core section, which leads to its wave-length specific reflectivity.

According to an embodiment, a said measuring space can be located externally with respect to the elongated waveguide structure. For example, the measuring space can be arranged or positioned spaced-apart from an external side of the elongated waveguide structure, for receiving light that is reflected there-to by the integrated reflector structure.

In a preferred embodiment, however, at least part of the measuring space is integrated in the optical waveguide structure, for example in a cladding of the optical waveguide structure (i.e. of a said optical fiber).

In this way a compact and more durable arrangement can be achieved. As an example, the measuring space can be machined into a cladding of an optical fiber at or near the location of a respective fiber Bragg grating reflector structure.

In a preferred embodiment, the measuring space is arranged between the first reflector structure and a second reflector structure, the second reflector structure being configured to reflect at least part of an incoming optical wave back through the measuring space, in particular to the first or a further reflector structure.

For example, at least part of the second reflector structure can be integrated in or with the optical waveguide structure, for example in and/or on a cladding of the optical waveguide structure.

This can provide further structural durability, robustness and compactness, ease of use and improved reliability.

It is preferred that the first reflector structure is configured to reflect at least a part (in particular a spectrum part) of incoming light in a substantially transversal (e.g. substantially radial) direction, viewed with respect to a local longitudinal direction of the elongated waveguide structure (i.e. a respective local optical axis of light transmission through the waveguide structure). According to an embodiment, the first reflector structure can e.g. be configured to reflect a first part of an incoming optical wave, in particular a first spectrum part of the wave, at an angle in the range of 20-160 degrees, preferably at an angle of about 90 degrees, with respect to an optical axis of the incoming wave. The first reflector structure can be configured to transmit of a remaining part of the incoming optical wave along the optical axis. According to a further preferred embodiment this can be achieved by a tilted fiber Bragg grating (known per se: in a tilted FBG . the variation of the refractive index is at an angle to the optical axis).

Each said measuring space can have various configurations, in particular for relating light that is transmitted there-through, to a physical quantity that is to be determined. For example, internal dimensions of the measuring space can provide a certain light transmission path length that can be related to the physical quantity to be measured. In addition or alternatively, a content of the measuring space can relate to the physical quantity to be measured. In an embodiment, the measuring space can be a vacuum space. Alternatively, the measuring space can be filled with a light transmitting material or mixture, for example a light transmitting fluid, liquid and/or gas.

Furthermore, the measuring space can e.g. be configured to be physically associated with a local environment of the elongated optical waveguide structure, in particular such that a change of a physical quantity in that environment leads to a change of a or the same physical quantity within the measuring space.

According to an embodiment, the system includes a fluid passage providing a fluid communication between the measuring space and an environment of the optical waveguide structure.

As follows from the above, according to an embodiment, the system includes an array of spaced-apart first reflector structures and respective transversally arranged measuring spaces, wherein at least one of the spaced-apart first reflector structures and respective measuring spaces, for example each of the spaced-apart first reflector structures and respective measuring spaces, are located remote from opposite end sections of the elongated waveguide structure.

Further, the system preferably includes a light source, for example a laser, for generating the optical wave, and detecting means for detecting at least part of light that has passed the measuring space, the detecting means in particular including processing means for processing detected light to determine or estimate said at least one physical quantity.

It will be appreciated that the system can be configured to detect various physical quantities. They include the following non-limiting options:
- a pressure of fluid in, at or near said measuring space;
- a temperature in, at or near said measuring space; and
- a refractive index of fluid in, at or near said measuring space.

Further, an aspect of the invention provides an innovative method for detecting at least one physical quantity, for example utilizing a system according to the invention.

The method includes:
- transmitting an optical wave through an optical waveguide structure; and
- transversally reflecting a first part of the optical wave towards and through a transversally arranged measuring space;
wherein the transversally reflecting is achieved by an integrated part of the optical waveguide structure.

In this way, above-mentioned advantages can be achieved.

Also, there is provided a method for manufacturing a sensor system according to the invention, the method at least including:
- providing an elongated optical waveguide structure for guiding an optical wave along a longitudinal direction;
- integrating a first reflector structure with or in the optical waveguide structure for reflecting at least part of an optical wave in a transversal direction; and
- arranging a measuring space transversally with respect to the first reflector structure.

The manufacturing method can be carried out in various ways. For example, the transversal measuring space can be provided before or after the manufacturing/integrating of the first reflector structure. Preferably, the measuring space is also integrated in or with the elongated optical waveguide structure. Preferably, the manufacturing includes providing an interferometric structure, based on the elongated optical waveguide structure, measuring space and first (and any further) reflector structures, so that a resulting sensor system can use optical interference to detect path length variations associated with the measuring space (such as with a content of that space and/or dimensions of that space).

Further elaborations of the invention are described in the subclaims. Presently, the invention will be clarified on the basis of an exemplary embodiment and the drawing.

In the drawings, similar or corresponding features are denoted by similar or corresponding reference signs.
Figure 1 schematically depicts a non-limiting embodiment of the present invention;
Figure 2 shows a detail Q1 of Figure 1, in a perspective opened view;
Figure 3A shows a detail Q2 from Figure 2, at a first state of the measuring space;
Figure 3B is similar to Figure 3A, showing the detail Q2 at a second state of the measuring space;
Figure 4A schematically shows a first manufacturing step of an first embodiment of a manufacturing process;
Figure 4B shows a cross-section over line IV-IV of Fig. 4B, of a respective second manufacturing step;
Figure 5A schematically shows a first manufacturing step of a second embodiment of a manufacturing process;
Figure 5B shows a cross-section over line V-V of Fig. 5B, of a respective second manufacturing step;
Figure 6A schematically shows a front view of first manufacturing step of a third embodiment of a manufacturing process;
Figure 6B shows side view of the example of Fig. 6A;
Figure 6C is similar to Fig. 6B, showing an alternative embodiment;
Figure 6D is similar to Figure 6A, depicting a second manufacturing step of the third embodiment;
Figure 6E depicts a third manufacturing step of the third embodiment;
Figure 7 schematically depicts a fourth embodiment of a manufacturing process;
Figure 8A depicts a cross-section of a yet another embodiment of the invention;
Figures 8B-8D are similar to Fig. 8A and show further alternative embodiments;
Figure 9 is similar to Figure 3A, depicting an alternative embodiment having a fluid passage towards to measuring space;
Figure 10 is similar to Fig. 1 showing a catheter embodiment of the invention; and
Figure 11 shows detail Q3 of Fig. 10.

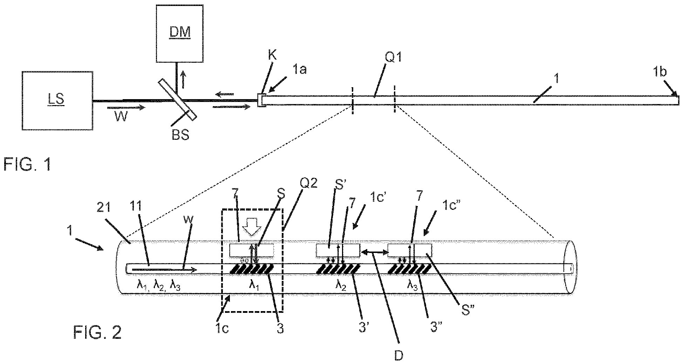

Figures 1-2 schematically show an example of a sensor system for detecting at least one physical quantity.

The system includes an elongated optical waveguide structure 1 for guiding an optical light wave (or light beam) W along a longitudinal direction (of the waveguide W). Also, the system includes a light source LS, for example laser.

At least part of the light that enters the waveguide structure 1 via a respective proximal end 1a is to exit that proximal end 1a after internal reflections in/by the waveguide structure 1 as will be explained below in more detail. In order to detect returning light, the system includes detecting means DM (for example including one or more photo sensors, a spectrometer and/or the-like).

The optical waveguide structure 1 can be coupled to the light source LS in various ways for receiving the emitted light beam W therefrom, for example directly, or indirectly via one or more intermediate light transmission passages and/or waveguides and/or connectors (one optical connector K being schematically drawn in Fig. 1).

Similarly, the detecting means DM can be coupled to the light source LS in various ways for receiving the emitted (returning) light therefrom, for example directly, or indirectly via one or more intermediate light transmitting passages and/or waveguides.

In the present non limiting embodiment, a beam splitter BS is arranged between a proximal end 1a of the optical waveguide structure 1 on one hand and the light source LS and detector means DM on the other, for transmitting at least part of light that exits that proximal end 1a towards the detecting means DM (to be detected thereby). In this example, the beam splitter BS is preferably configured to allow passage of a significant part of light emitted from the light source LS towards (and into) the optical waveguide structure 1.

It will be appreciated that various modifications are feasible, for example including a plurality of light sources and a plurality of optical waveguide structures 1, and/or a plurality of detector means DM. Also, each light source LS can be configured to emit broadband light or non-broadband light or light of one or more specific wavelengths. For example, the light source can be a swept light source (e.g. providing light of varying wavelength over time, e.g. periodically). It will be appreciated that, preferably, coherent light is used, in view of interferometry. Light that is emitted by the source LS can include various wavelengths, e.g. from one or more of the visible spectrum, ultraviolet spectrum, infrared spectrum and/or other spectra. _

Also, in the present preferred embodiment, the waveguide structure 1 is an optical fiber.

Referring to Figure 2, schematically showing part of the waveguide structure, i.e. optical fiber 1, in more detail. In the drawings, a fiber 1 having a circular cylindrical configuration is depicted (having a central core 11 with a circular cross-section and a concentric cladding 21), however, the invention is not limited to such a fiber shape. For example, a fiber core 11 can have a different cross-section, e.g. oval, square, angular, rectangular or differently. Also, as is mentioned before, an optical fiber 1 can have further fiber parts/sections such as a buffer, shield et cetera, which are not depicted in the present schematic drawings.

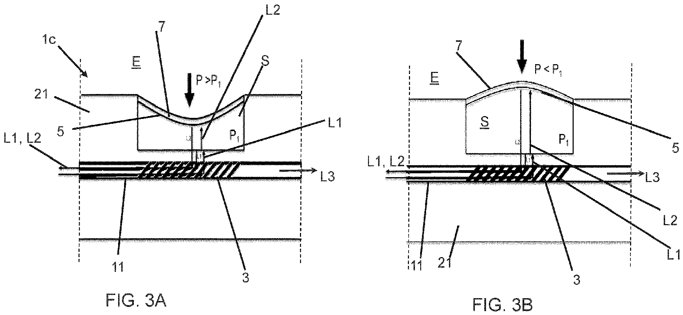

The present fiber includes a plurality (in this case three) integrated first reflector structures 3, for reflecting at least part W1 of the optical wave towards and through a respective transversally arranged measuring space S that relates to a quantity to be measured. A said measuring space S is shown in more detail in Figures 3A, 3B (at two respective measuring space conditions). The fiber 1 can also include less or more such integrated reflector structures 3.

It follows that there is provided an array of spaced-apart first reflector structures 3, 3', 3" and respective transversally arranged measuring spaces S, S', S" (each providing a respective detection section 1c, 1c', 1c" of the fiber). Each of the spaced-apart first reflector structures 3 and respective measuring spaces S, for example each of the spaced-apart first reflector structures 3 and respective measuring spaces S, are located remote from opposite end sections 1a, 1b of the elongated waveguide structure 1.

Depending on a total length of the fiber 1 (which may be about 1 to several meters, at least 10 meter or at least 100 meter), a distance D between two neighboring detection sections 1c, 1c', 1c" (measured in longitudinal direction of the fiber) can be about 0.1 mm or smaller, or a distance of 1 to several mm, 1 to several cm, 1 to several dm, 1 to several meters, or more, as will be clear to the skilled person. Also, this distance D may vary, viewed along the array of detection sections 1c, 1c', 1c" (wherein a first pair of neighboring detection sections is arranged relatively closely to each other and another pair of neighboring detection sections is located relatively far away from each other, viewed along the fibers longitudinal direction).

In this example, each first reflector structure 3, 3', 3" is configured to reflect a first part L1, L2 of an incoming optical wave, in particular a first spectrum part (λ₁, λ₂, λ₃ respectively) of the wave, at an angle in the range of 20-160 degrees, preferably at an angle of about 90 degrees, with respect to an optical axis of the incoming wave, the first reflector structure 3 in particular being configured to substantially transmit a remaining part L3 of the incoming optical wave along the optical axis. Preferably, to that aim, each first reflector structure 3, 3', 3" is a tilted Fiber Bragg Grating FBG, being arranged in a core 11 of the optical fiber 1. For example (as is shown in the drawings) each of the subsequent grating sections of the FBG can include an angle of about 45 degrees with the optical axis (viewed in side view). Such an FBG is also known as a 45°-tilted fiber grating.

More particularly, in this example, a first tilted FBG 3 is integrated in the fiber core 11, configured to reflect incoming light having a first Bragg wavelength λ₁ (towards the respective measuring cavity S). A subsequent tilted FBG 3' is integrated in the fiber core 11, configured to reflect incoming light having a second Bragg wavelength λ₂, for example (but not necessarily) a second wavelength that differs from said first Bragg wavelength. Similarly, yet another subsequent tilted FBG 3" is integrated in the fiber core 11, configured to reflect incoming light having a third Bragg wavelength λ₃, for example (but not necessarily) a third wavelength that differs from said first and/or second Bragg wavelengths.

As is mentioned before, each said measuring space S can have various configurations. In this case, the measuring space S is entirely integrated in the optical waveguide structure 1, in particular in the cladding 21 of the optical fiber 1.

In particular, the measuring space S as such is configured to transmit the light L2 that it receives from the respective tilted FBG 3.

In this example, each measuring space S is provided with a respective second reflector structure 5, for reflecting at least part of the transmitted light back via the measuring space S towards the respective tilted FBG, wherein the tilted FBG can reflect that light (at least part thereof) back and return it via the fiber 1 towards the proximal fiber end 1a (to be detected by the detection means DM). It follows, in particular, that the light L2 passes the measuring space S (twice) in a direction that is substantially perpendicular (e.g. transversally, or radially) to a longitudinal direction of transmission though the fiber 1 (i.e. an axial direction of the respective fiber core 11).

For example, an inner surface of a transversally outer wall 7 of the measuring space S can be or include a mirror surface, for providing respective light reflectivity. The transversally outer wall 7 of the measuring space S can e.g. be integral part of the cladding 21 of the fiber 1, and/or a dedicated cover wall (depending e.g. on a manufacturing process used), as will be explained below.

It follows that each measuring space S is preferably arranged between the first reflector structure (FBG) 3 and a respective second reflector structure 5, the second reflector structure being configured to reflect at least part of an incoming optical wave back through the measuring space S (and to the first reflector structure).

Furthermore, due to its integration in the fiber cladding 21, a transversally (i.e. radially) inward interface between the measuring space S and the cladding 21 can act as a semi-reflective surface that reflects part of incoming light (reflected thereto by the respective FBG) back to the FBG as well. This part of the light, which does not enter the measuring space S, can serve as reference light for interferometry and is indicated by arrows L1 in the drawings. In other words, the present system is configured to generate optical reference waves L1 that are not transmitted into and through the measuring spaces S. Also, the present sensor system is configured to join each reference wave L1 with light L2 that has been transmitted through the respective measuring spaces S to interfere therewith (as follows from Figures 2-3).

For example, for obtaining the optical reference waves L1, a content of each measuring space S preferably can have a different refractive index than a refractive index of cladding material that defines or encloses the measuring space S. To that aim, the measuring space S can e.g. be a vacuum space (e.g. for detecting absolute pressure P), or it can be filled with one or more of light transmissive fluid, gas, liquid, or a mixture. Also, one or more coatings for improving semi-reflectivity can be applied onto a laterally inward surface of the measuring space S.

Thus, the transversally inner surface of the measuring space S can act as a mirror surface that reflects a first part L1 of the incoming light back to the respective tilted FBG and allows passage of a second part L2 of that incoming light into the measuring space S (towards the second reflector structure 7).

The detecting means DM can include processing means for processing detected light, to determine or estimate said at least one physical quantity. In particular, the detecting means DM can be configured to detect interference between the reflected first and second light waves L1, L2 (i.e. the reference light L1 that has not passed the measuring space S and the light L2 that has passed the measuring space), providing information concerning the path length (or a change thereof) of the light L2 that has passed the measuring space S. It will be appreciated that in this way, any change in that path length can be determined with high accuracy. Also, the detecting means DM can be configured to discern light signals having the various Bragg wavelengths (λ₁, λ₂, λ₃) they may be achieved by the integrated tilted Bragg gratings, to determine detection results associated with the various detection sections 1c of the fiber 1.

Moreover, the detecting means DM can include information regarding each of the measuring spaces S (e.g. stored in a respective memory) for use in the processing of detection results, for example predetermined calibration information based on sensor calibration measurements and/or information concerning a content of the measuring space (e.g. a refractive index of that content) and/or information concerning dimensions of that space S (e.g. an actual distance between a transversally inner surface and a transversally outer surface of that space S). In order to process detection results, the detecting means DM can include or be associated e.g. with a signal processor, computer or the-like, as will be clear to the skilled person; also it will be clear that the detecting means DM can include a user interface allowing user interaction/control therewith and detection results output means for outputting (e.g. displaying and/or storing) a measurement result.

In this way, depending on the configuration of the measuring space S, the system can be configured to detect at least one of the following physical quantities:
- a pressure of fluid in, at or near said measuring space S;
- a temperature in, at or near said measuring space S; and
- a refractive index of fluid in, at or near said measuring space S.

For example, Figures 3A, 3B show a first example, wherein the integrated measuring space S is configured for detecting an external pressure or pressure variation.

In this case, the measuring space S is configured to be physically associated with a local environment E of the elongated optical waveguide structure 1, in particular such that a change of a physical quantity in that environment leads to a change of a or the same physical quantity within the measuring space S. The present measuring space (or 'pressure chamber') S can e.g. be closed-off from the environment E by a flexible or deformable cover member 7, for example a resilient cover 7 (see Figures 3A, 3B). Thus, a change in pressure P in that environment E can lead to a movement of the cover member 7 which leads to a change of the optical path length in the measuring space S, which change can be detected by the detection means DM (as explained above). In Figure 3A, the external pressure P is larger than an internal pressure P1, leading to inward flexing of the cover member 7. In Figure 3B, the external pressure P is smaller than an internal pressure P1, leading to outward flexing of the cover member 7.

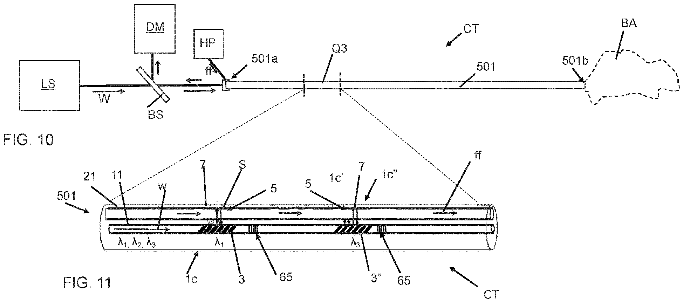

In other words, the fiber 1 can e.g. be called a distributed fiber optic sensor. As follows from the above, the distributed fiber optic sensor 1 can comprise on or more pressure chambers S located in the cladding 21 of the fiber 1. In an embodiment, the pressure chambers S may each comprise e.g. a gas(-mixture), e.g. air, e.g. at a known initial pressure (such as 1 bar or a different pressure). The pressure chamber S may be a closed chamber (e.g. in case it has no fluid communication to an environment of the fiber 1), but that is not required (as follows from the embodiment of Fig. 11). A known initial pressure in the chamber S may be predetermined in various ways, e.g. by initial measurement before use or before filling of that space S (e.g. in case of a space S that is closed), and/or by providing a fluid connection to that chamber S allowing an initial pressure measurement (using an external pressure measuring sensor, or by providing an open connection to an environment, e.g. via a proximal fiber section (see e.g. embodiments mentioned below).

In an embodiment, the cover member 7 can be a relatively thin external part of the fiber cladding 21 that extends between the chamber S and the environment E (e.g. acting as a membrane 7). If a pressure P higher than the pressure P1 inside the pressure chamber S is applied from the outside of the fiber (from environment E), the cover member will displace in the direction of the fiber core 11. Preferably, this displacement correlates with the applied pressure and is measurable using interferometry.

As follows from the above, the tilted FBG can direct light of a specific wavelength (λ₁, λ₂, λ₃) that is injected into the fiber core 11 from one end 1a of the fiber towards the cladding and in particular towards the respective pressure chamber. In a further embodiment, a first part of the light (L1) is reflected from a cladding-gas interface (in case the chamber S is filled with gas) back into the core 11. A second part of the light (L2) is transmitted across the cladding-gas interface, travels through the pressure chamber S and is (wholly or in part) reflected from the gas-cladding interface back into the fiber core 11. As mentioned, said first and second parts of the light reflected back into the core will interfere with each other. Constructive interference will occur if the optical path length travelled by the second part of the light is an integer number of wavelengths more that the path that the first part of the light travelled. This optical path difference equals twice the width of the pressure chamber (in the direction of the radius of the fiber). On the other hand, destructive interference will occur of the optical path difference is an integer number plus ½ wavelengths. In this example, the optical path difference depends on the applied external pressure. An applied pressure higher P than the pressure P1 in the chamber will result in bending of the membrane towards the core of the fiber (figure 3A). This will shorten the optical path difference. Conversely, if the applied pressure P is lower that the pressure P1 in the chamber, the membrane will bend in the opposite direction (away from the fiber core) resulting in a longer optical path difference (figure 3B). Constructive interference results in a maximum in the amplitude of the light projected into the core 11 and, via the tilted FBG, exits at the end 1a of the fiber. Destructive interference results in a minimum in the amplitude of the light projected into the fiber core. Hence, the detecting means DM can simply observe the variations in intensity of the light, for the specific wavelength corresponding with the tilted FBG of a specific pressure sensor, to detect variation in applied pressure.

Preferably, the tilted FBGs selectively deflects light of a specific wavelength to the cladding, while other wavelengths are transmitted through the FBG. This allows the interrogation of multiple pressure sensor sections 1c at the same time in the same fiber 1, using different wavelengths for the light injected into the fiber end. Each pressure sensor section 1c hence gives a response in the output light at a different wavelength.

Many variations on this concept are feasible as will be appreciated by the skilled person, for example, the cover member 7 may be a resilient cover that counteracts flexing with spring force, but that is not required. Also, instead of a flexible cover, a non-flexible movable wall part can be provided for closing-off the measuring space S from its environment E. Spring means can be installed for counteracting movement of such a wall member using spring force. Also, e.g., the content of the measuring space S can provide a spring means as such (e.g. a compressible gas or gas mixture, filling the space S, can act as a spring).

In yet another embodiment, a cover member 7 can be applied that is deformed or moves upon change of other physical properties, e.g. a change in environmental temperature, electric charge, radiation, et cetera, such that the deformation or movement can be detected by the system.

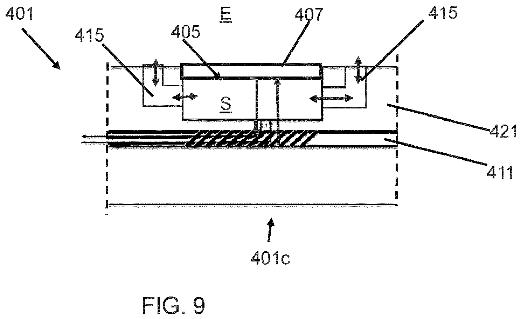

In another embodiment, (see Figure 9), one or more fluid passages 415 (for example gas passages or liquid passages) can be present, providing a fluid communication between the measuring space S and an environment of the optical waveguide structure 1. In this example, each fluid passage is integrated in the cladding 421 of the fiber 401. Also, in this case, a second reflector structure 405 may have a fixed position with respect to the fiber core 411. The respective integrated measuring space S can be e.g. sealed off from an environment via a cover 407 that includes the reflector structure, wherein the cover 407 may e.g. be a rigid (i.e. non-deformable) cover 407. In this way, fluid (e.g. gas or liquid) present in the environment E can enter the measuring space S (fluid flow being indicated by double arrows in the drawing). A change in a refractive index within the measuring space (resulting from such fluid flow, e.g. due to a change of composition and/or density of the fluid) can change the optical path length of the light L2 that is transmitted through the measuring space S, which can be detected by the detecting means DM (via interference, as explained above).

Operation of the system can involve a method for detecting at least one physical quantity, for example utilizing a system according to any of the preceding claims, including:
- transmitting an optical wave W through an optical waveguide structure 1 (the fiber 1, in this case); and
- transversally reflecting a first part L2 of the optical wave towards and through a transversally arranged measuring space S;
wherein the transversally reflecting is achieved by an integrated part, in particular a tilted FBG, 3 of the fiber 1.

During use, the system also generates reference waves L1 (at each measuring section 1c), from the optical wave W that is transmitted through the waveguide structure.

The waves L1, L2 are jointed to interfere, which is detected by the detecting means DM. The detection results are processed for determining optical path lengths (or path length variations) of the waves that have passed the measuring spaces S, providing desired information concerning respective physical properties associated therewith. Thus, use of the system can include measuring an optical path length of light L2 that is transmitted through the measuring space S.

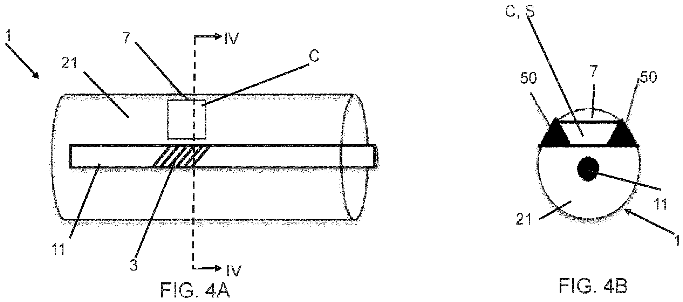

Manufacturing of the system, in particular of the waveguide structure 1, can be achieved in various ways, as is indicated in the examples of Figures 4-7.

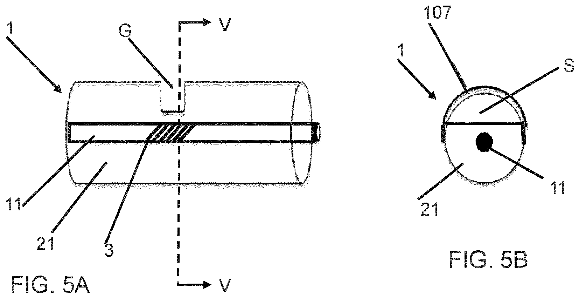

Figure 4A schematically shows part of a fiber 1. Therein, as part of a first manufacturing step, using e.g. micromachining, drilling or the-like, a cavity C can be made in the fiber 1, in particularly in its cladding 21. The cavity C is located transversally from an integrated tilted FBG (which can e.g. already be present in the core 11), at the same longitudinal fiber position. In this example, the cavity C extends entirely through the cladding, between two opposite ends, wherein an outer section of the cladding 7 remains in place to cover the cavity. Subsequently (see Figure 5B), both ends of the cavity can be sealed off from an environment with seals 50, e.g. any suitable non-permeable material 50, to form a closed integrated measuring space S. Alternatively, the integrated space S can be formed from a cavity that penetrates the cladding 21 from one side without penetrating an opposite side, the open end of the cavity being sealed.

Figures 5A, 5B show an alternative manufacturing process, wherein, using e.g. micromachining, an indentation G is made in a fiber 1. Subsequently, a membrane 107 is applied to cover the indentation G and to form a closed chamber S. The membrane 107 can e.g. be flexible to allow bending, yet impermeable for the liquids and or gasses inside and outside the chamber S.

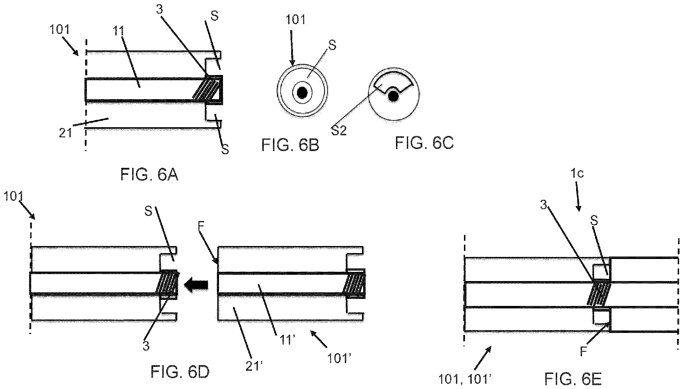

In yet another, preferred manufacturing process (see Figures 6A, 6B, 6C, 6D), a cladding 21 of a fiber or fiber part 101 is etched at one of its ends to form a measuring space S(opposite a tilted FBG location) of a fiber measurement section 1c. As is shown in Fig. 6B, the measuring space S can be concentric with respect to the fiber core 11, but that is not required (see an alternative S2 shown in Fig. 6C).

Subsequently (see Fig. 6D), the butt end of a second fiber or fiber part 101' (preferably of the same kind) is attached e.g. via splicing to the etched fiber end to axially close off the measuring space S, and to optically link respective fiber cores 11, 11' (and aligning respective fiber claddings 21, 21'). In particular, in this example, an axially outer surface F of the cladding 21' of the second fiber or fiber part 101' covers c.q. closes the measuring space S after the interlinking (see Fig. 6E).

Also, this second fiber 101 may also have an etched butt end for forming another measuring space S, to which e.g. a third fiber can be attached via splicing, and so on. The thus connected fibers 101, 101' can form a wave guide structure 1 according to above described embodiments. By doing so an array of fiber sensor sections 1c may be created along the length of a single fiber 1.

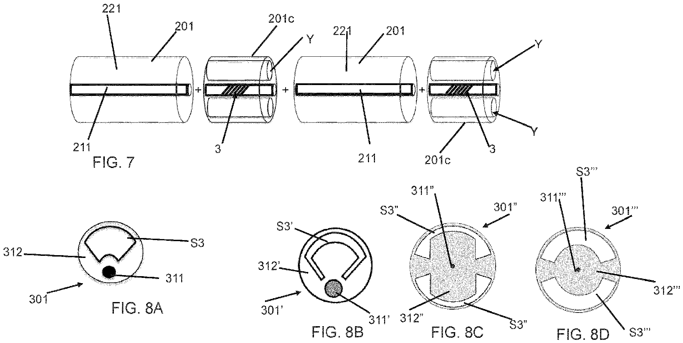

Figure 7 shows another example, wherein a commercially available hollow core fiber is used to provide measurement chambers. Such a hollow core fiber includes a cladding having one or more (in this case two) longitudinal interior hollow spaces Y. From the hollow core fiber, fiber measurement sections 201c can be cut. Each fiber measurement section 201c can be provided with a tilted FBG. Also, fiber sections 201 without hollow core (having a fiber core 211 and fiber cladding 221) can be attached on either side of a hollow core section 201c to close off the hollow spaces Y to form respective measurement spaces S. At the end of the resulting fiber a next piece of hollow core fiber 201c and a next piece of closed fiber can be attached. By doing so an array of sensor sections may be created along the length of a single fiber.

Figure 10 is similar to Fig. 1, and shows a catheter embodiment of the invention. Figure 11 shows detail Q3 of Fig. 10. This example differs from the above-described embodiments in that the elongated optical waveguide structure 501 for guiding the optical wave W along a longitudinal direction is a flexible catheter CT, or part of a catheter CT.

The present catheter CT includes at least one lumen S (i.e. a longitudinal internal space, internal channel) extending from a proximal catheter section 501a to a distal catheter section 501b. In particular, the lumen provides an elongated measuring space S within the catheter. In a preferred embodiment, the catheter CT includes a plurality of lumen S. A distal end of each of the lumen S can be an open end or a closed end.

For example the catheter CT can include at least one lumen S having an open distal end, as well as at least one lumen S having a closed distal end. Similarly, each of the lumen S can have an open proximal end, but that is not required. Optionally, a said lumen S can be closed at both its proximal and distal end, providing a closed measuring space that can e.g. be filled with a gas or gas mixture, or vacuum.

In a non-limiting embodiment, the catheter CT can be connectable to an external fluid supply HP, for example a gas supply, configured to feed a fluid ff (e.g. gas or gas mixture, liquid, medicament, infusion and/or the-like) into the measuring space S, in particular via an open proximal lumen end (if available). To that aim, the catheter CT (in particular said lumen S) can include a fluid inlet at its proximal section 501a that is connectable to a fluid outlet of the fluid supply HP. The fluid ff used can e.g. be an inert gas, for example helium, a liquid, infusion fluid.

Alternatively, a said lumen S can be implemented or used for feeding or guiding fluid (e.g. a bodily fluid) in a different direction, e.g. from a distal section 501b of the catheter to a proximal section 501a of the catheter (in which case the lumen S is open at both its ends).

Alternatively or additionally, the lumen S can be used for guiding a guide wire (not shown) through the catheter CT.

Besides, the catheter CT can include a plurality of lumen for carrying out different functions, wherein at least one of these lumen provides a said measuring space S.

A distal end 501b of the catheter can be configured for delivering fluid, supplied via the lumen S, e.g. to a patient (for example, as follows from the above, the respective distal end of the lumen S can be open to an environment). Also, for example, a distal section 501b of the catheter can be provided with an inflatable structure, e.g. an inflatable balloon BA (shown in dashed lines), to be inflated by fluid fed via the lumen S during operation.

Referring to Figure 11, the catheter CT can include an optical fiber having a core 11 and cladding 21. The fiber includes at least one first reflector structure and preferably a plurality of spaced-apart first reflector structures 3, 3", in particular tilted FBGs, for reflecting at least part W1 of an afore-mentioned optical wave towards and through a respective transversally arranged lumen S of the catheter CT.

As in the above embodiments, the lumen or measuring space S as such is configured to transmit the light that it receives from the respective tilted FBGs 3, 3". Also, the elongated (continues) measuring space S is associated with each of the tilted FBGs 3, 3" of the fiber core 11 (i.e. the lumen serving as measuring space S extends along each of the tilted FBGs 3, 3".

The catheter CT can further include a respective second reflector structures 5, for reflecting at least part of the transmitted light back via the measuring space (lumen) S towards the respective tilted FBG 3, 3", wherein the tilted FBG can reflect that light (at least part thereof) back and return it via the fiber core 1 towards the proximal end 501a (to be detected by the detection means DM). As above, it follows, in particular, that the light passes the measuring space S (twice) in a direction that is substantially perpendicular (e.g. transversally, or radially) to a longitudinal direction of transmission though the fiber 1 (i.e. an axial direction of the respective fiber core 11).

For example, an inner surface of a transversally outer wall 7 of the measuring space (lumen) S can be or include a mirror surface, for providing respective light reflectivity. In a further embodiment, the transversally outer wall 7 can be a flexible or resilient wall, at least locally opposite to the tilted FBG 3, 3", such that pressure variation in (or on) the lumen S can lead to transversal wall deformation or displacement (similar to the embodiment of Figures 3A, 3B). In this way, local internal catheter lumen pressure or relative pressure (e.g. with respect to an ambient pressure) can be detected by the system. For example, during catheter operation, fluid (e.g. gas, helium) can be fed through the lumen S towards the distal end 501b of the catheter (e.g. to inflate or pressurize an optional balloon BA). The integrated FBG structures 3, 3" can be used by the system to carry out local lumen related measurements (e.g. concerning the fluid flow and/or pressure), analogue the operation of the examples of Figures 1-9.

Additionally or alternatively, for example, the distal end of at least one of the lumen S (at the distal end of the catheter) can be closed. In that case, for example, the closed lumen S can be held at a predetermined or constant, e.g. ambient pressure (e.g. atmospheric pressure), e.g. by providing an open proximal lumen end (being open to the environment) at the proximal catheter section 501a. In this way, the system can detect pressure differences with respect to ambient pressure. For example, blood pressure related pressure differences can be detected in case of an intravenous catheter, wherein for example the transversally outer wall 7 can be a flexible or resilient wall, at least locally opposite to the tilted FBG 3, 3", such that external blood pressure variation on the wall 7 can lead to transversal wall deformation or displacement (similar to the embodiment of Figures 3A, 3B).

In the same way, for example, the distal end of the lumen S (at the distal end of the catheter) can be closed, wherein the lumen S can be held at a predetermined pressure that differs from ambient pressure , e.g. by connecting a proximal lumen end to a pressure source (e.g. fluid source HP) or vacuum source. For example, a connected vacuum source (not shown) can achieve a vacuum in the lumen S, so that absolute pressure can be detected by the system.

As follows from Figure 11, preferably, one or more additional FBGs 65 are integrated in the fiber core 11, for example additional FBGs 65 that are located near the tilted FBGs 3, 3". Each additional FBGs 65 can be a non-tilted ('normal') FBG, that is configured to reflect part of incoming light directly back along the optical axis of the fiber core (back to the proximal end 501a of the fiber). Such an additional FBG can be used e.g. to carry out a local temperature measurement. Preferably, each additional FBG 65 is configured to reflect light at a Bragg wavelength that differs from the Bragg wavelengths of the other FBGs 3, 3" (to avoid interfering respective measurements concerning the other FBGs).

The invention is by no means limited to the embodiments specifically disclosed and discussed here above. Many variations thereof are possible, including but not limited to combinations of parts of embodiments shown and described.

For example, in various embodiments, an optical fiber is used having a centrally arranged light guiding fiber core 11. However, as is shown in the cross-section of Fig. 8A, alternatively, a fiber 301 can include an off-axis core 311, leaving, such that a relatively large (i.e. wide) measuring space S3 can be integrated in the cladding 312. This allows to optimize the size of that space S3 to the specifications for a desired measurement application.

Various measuring space widths can be applied. For example. Figure 8B shows an (asymmetric) embodiment, of a fiber 301' including an off-axis core 311', and an off-axis slit-like (curved) measuring space S3' (diametrically with respect to the core 311') integrated in the respective cladding 312', a width of the off-axis measuring space S3' being significantly smaller than the width of space S3 of the embodiment of Fig. 8A.

Figure 8C shows another example, in this case having a mirror-symmetrical configuration (viewed in the cross-section) It includes a fiber 301" that has a central core 311" located between two slit-like curved measuring spaces S3" that are integrated in the cladding 312". An alternative example is shown in Fig. 8D, of a fiber 301'" that includes a core 311'", between two relatively wide curved measuring spaces S3'" in the cladding 312'".

In yet another example (not shown), the fiber can have a (preferably central) core located between more than two (e.g. curved) measuring spaces, for example between three or four measuring spaces, for example in a symmetrical configuration when viewed in cross-section.

Furthermore, optionally, in the above embodiment a coating (e.g. a silver coating), providing e.g. 40% reflectivity, can be applied, such that the light intensity received back from both the long and short path (concerning each measuring space) can be optimally matched. This can improve a signal to noise ratio. The coatings can e.g. be applied batch-wise, and e.g. such that one coating step can be applied during manufacturing of multiple pressure sensors.

Also, the first reflector structure can be integrated in the waveguide structure in various ways. For example, in case of an optical fiber the first reflector structure can be at least partly made in a core of the fiber but that is not required. In another embodiment, the first reflector structure can be separately connected to the fiber, e.g. to a butt end, for receiving and reflecting the optical wave.

Similarly, the transversally arranged measuring space S that relates to a quantity to be measured, can be integrated in an optical fiber cladding (in the case an optical fiber is used as waveguide structure) but that is not required. The space can also be located at a different transversal fiber location, e.g. at least partly in any subsequent optional fiber layer (e.g. in a buffer) or differently.

Moreover, the invention can be applied in various fields of technology, e.g. sensor technology, medical technology (e.g. catheters), optical system technology, structural integrity monitoring (e.g. automotive or airplane monitoring systems), downhole distributed pressure sensing for oil/gas/geothermal applications, acoustic sensing, distributed pressure/temperature sensing in ventilation ducts in e.g. buildings, and the-like as will be appreciated by the skilled person.

Also, for example, (see e.g. Fig. 11) the sensor system can include one or more additional FBG reflector structures 65 (e.g. integrated in the optical waveguide structure 1) providing 'normal' (axial) reflection at one or more respective wavelengths, e.g. for detecting temperature or the-like.

These and many other amendments are considered to have been disclosed herein also, including but not limited to all combinations of elements of the invention as disclosed, within the scope of the invention as presented.

For example, a coating for improving reflectivity of the structure can be or include a metal coating, e.g. (in case of a medical application) a gold coating, a silver coating, a polyimide coating and/or a combination of such or other coating materials.

Also, as follows from the above, a non-limiting intravenous catheter embodiment can include at least one lumen S that is closed at a distal section 501b of the catheter CT; such a catheter can optionally include at least a second lumen S that is open at the distal section 501b of the catheter (e.g. for feeding fluid through the catheter CT), or at least a second lumen that is closed at the distal section 501b of the catheter.

Besides, the presence of a lumen, or the use of a lumen as measuring space, is not essential. For example, even without a lumen or lumen as measuring space, previously mentioned embodiments (see e.g. the embodiments shown in Figures 4 through 9) can be a flexible catheter, or part of such a catheter.

## Claims

1. Sensor system for detecting at least one physical quantity, including:
- an elongated optical waveguide structure (1; CT) for guiding an optical wave (W) along a longitudinal direction;
- a first reflector structure (3) for reflecting at least part (W1) of the optical wave towards and through a transversally arranged measuring space (S) that relates to a quantity to be measured;
**characterized in that** the first reflector structure (3) is integrated in the waveguide structure (1; CT).

2. Sensor system according to claim 1, wherein the waveguide structure (1; CT) is or includes an optical fiber.

3. Sensor system according to claim 2, wherein the first reflector structure (3) is a Fiber Bragg Grating (FBG), in particular being arranged in a core (11) of the optical fiber (1).

4. Sensor system according to any of the preceding claims, wherein at least part of the measuring space (S) is integrated in the optical waveguide structure (1), for example in a cladding (21) of the optical waveguide structure (1).

5. Sensor system according to any of the preceding claims, wherein the measuring space (S) is arranged between the first reflector structure (3) and a second reflector structure (5), the second reflector structure being configured to reflect at least part of an incoming optical wave back through the measuring space (S), in particular to the first or a further reflector structure.

6. Sensor system according to claim 5, wherein at least part of the second reflector structure (5) is integrated in or with the optical waveguide structure (1), for example in and/or on a cladding (21) of the optical waveguide structure.

7. Sensor system according to any one of the preceding claims, wherein the first reflector structure (3) is configured to reflect a first part (L1, L2) of an incoming optical wave, in particular a first spectrum part of the wave, at an angle in the range of 20-160 degrees, preferably at an angle of about 90 degrees, with respect to an optical axis of the incoming wave, the first reflector structure (3) in particular being configured to transmit of a remaining part (L3) of the incoming optical wave along the optical axis.

8. Sensor system according to at least claims 7 and 3, wherein the first reflector structure is a tilted Fiber Bragg Grating.

9. Sensor system according to any of the preceding claims, wherein the measuring space (S) is configured to be physically associated with a local environment of the elongated optical waveguide structure (1), in particular such that a change of a physical quantity in that environment leads to a change of a or the same physical quantity within the measuring space (S).

10. Sensor system according to any of the preceding claims, wherein the measuring space (S) is closed-off from an environment by a flexible or deformable cover member (7).

11. Sensor system according to any of the preceding claims, including a fluid passage (15) providing a fluid communication between the measuring space (S) and an environment of the optical waveguide structure (1).

12. Sensor system according to at least one of the preceding claims, including an array of spaced-apart first reflector structures (3) and respective transversally arranged measuring spaces (S), wherein at least one of the spaced-apart first reflector structures (3) and respective measuring spaces (S), for example each of the spaced-apart first reflector structures (3) and respective measuring spaces (S), are located remote from opposite end sections of the elongated waveguide structure (1).

13. Sensor system according to at least one of the preceding claims, including a light source (LS), for example laser, for generating the optical wave, and detecting means (DM) for detecting at least part of light that has passed the measuring space (S), the detecting means in particular including processing means for processing detected light to determine or estimate said at least one physical quantity.

14. Sensor system according to any of the preceding claims, wherein the system is configured to detect at least one of the following physical quantities:
- a pressure of fluid in, at or near said measuring space (S);
- a temperature in, at or near said measuring space (S); and
- a refractive index of fluid in, at or near said measuring space (S).

15. Sensor system according to any of the preceding claims, wherein the sensor system is configured to generate an optical reference wave that is not transmitted through the measuring space (S), wherein the sensor system is configured to join the reference wave with light that has been transmitted through the measuring space to interfere therewith.

16. Catheter, including at least part of a sensor system according to any of the preceding claims, wherein preferably the elongated optical waveguide structure for guiding an optical wave (W) along a longitudinal direction is integrated in the catheter (CT).

17. Method for detecting at least one physical quantity, for example utilizing a system according to any of the preceding claims, including:
- transmitting an optical wave (W) through an optical waveguide structure (1); and
- transversally reflecting a first part (W1) of the optical wave towards and through a transversally arranged measuring space (S);
wherein the transversally reflecting is achieved by an integrated part (3) of the optical waveguide structure (1).

18. Method according to claim 17, including:
- generating a reference wave, preferably from the optical wave (W) that is transmitted through the waveguide structure; and
- joining light that has been transmitted through the optical waveguide structure (1) with the reference wave.

19. Method according to claim 17 or 18, including measuring an optical path length of light that is transmitted through the measuring space (S), wherein the optical path length is associated with the physical quantity to be detected.

20. Method for manufacturing a sensor system according to any of claims 1-15, the method at least including:
- providing an elongated optical waveguide structure (1) for guiding an optical wave (W) along a longitudinal direction;
- integrating a first reflector structure (3) with or in the elongated optical waveguide structure (1) for reflecting at least part (W1) of an optical wave in a transversal direction; and
- arranging a measuring space (S) transversally with respect to the first reflector structure (3).
